# FASCICULE DE BREVET EUROPEEN

(11) **EP 2 571 634 B1**
(45) Date de publication et mention de la délivrance du brevet: **05.09.2018**
(21) Numéro de dépôt: 11727225.2
(22) Date de dépôt: 18.05.2011
(51) Int. Cl.: B09B 3/00, A61L 11/00

(54) **SYSTEME DE RECUPERATION POUR CUVE DE TRAITEMENT COMPORTANT DES OBJETS TELS QUE DES DECHETS TRAITES**
RÜCKGEWINNUNGSSYSTEM FÜR EINEN AUFBEREITUNGSTANK MIT OBJEKTEN WIE AUFBEREITETEM ABFALL
RECOVERY SYSTEM FOR A TREATMENT TANK COMPRISING OBJECTS SUCH AS TREATED WASTE

(30) Priorité: 18.05.2010 FR 1053842
(43) Date de publication de la demande: 27.03.2013
(73) Titulaire: Ecodas, 59100 Roubaix (FR)
(72) Inventeur: SQUALLI, Jeff, F-59290 Wasquehal (FR)
(74) Mandataire: Balesta, Pierre
(86) Numéro de dépôt international: PCT/FR2011/051123
(87) Numéro de publication internationale: WO 2011/144866

(56) Documents cités:
- WO-A1-92/20379
- WO-A1-02/062479
- GB-A- 2 297 553
- US-A- 4 670 227

## Description

### Domaine technique

L'objet de la présente invention concerne le domaine des installations pour le traitement d'objets tels que des déchets ; plus précisément, l'objet de la présente invention concerne le domaine des systèmes de récupération permettant l'extraction et la vidange d'objets pour de telles installations.

L'objet de la présente invention trouve une application dans le domaine général du traitement des déchets issus d'une intervention ou d'une prestation médicale ou paramédicale.

L'objet de la présente invention trouve une application avantageuse dans la filière du traitement et de l'élimination des déchets d'activités de soins à risques infectieux dits « DASRI » pour « Déchets d'Activités de Soins à Risques Infectieux », l'objet de la présente invention trouvant une application particulièrement avantageuse dans les installations permettant le broyage et la stérilisation des DASRI.

Par déchets d'activités de soins à risques infectieux ou DASRI, on entend dans toute la présente description qui suit tous types d'objets issus des activités de diagnostic, de suivi et/ou de traitement préventif, curatif ou palliatif dans les domaines de la médecine humaine et vétérinaire.

Il peut donc s'agir par exemple de tous types d'objets ou de matériels, à des fins d'examens pathologiques ou bactériologiques, comprenant ou ayant compris un prélèvement organique, une sécrétion, une excrétion ou encore un fragment de tissu prélevé d'un corps humain ou animal lors d'une intervention médicale ou paramédicale.

Généralement, il s'agit de tous objets ou matériels susceptibles de présenter un risque infectieux du fait qu'ils contiennent des micro-organismes viables et/ou des toxines dont on sait ou dont on a de bonnes raisons de croire qu'en raison de leur nature, de leur quantité et/ou de leur métabolisme, ils peuvent causer une maladie ou une infection chez l'homme ou chez d'autres organismes vivants.

### Etat de la technique

Comme évoqué ci-dessus, les déchets DASRI issus des activités de soins sont potentiellement infectés, et sont donc susceptibles de représenter un danger aussi bien pour l'homme que pour l'environnement.

Or, les établissements de soins tels que les centres hospitaliers ou les hôpitaux, privés ou publics, ont la responsabilité d'éliminer ces déchets DASRI, ceci bien évidemment sans mettre en danger la santé de l'homme ni porter préjudice à l'environnement.

On connaît dans l'état de la technique des installations pour le traitement des déchets DASRI.

La demanderesse propose ainsi des installations comportant une cuve de traitement configurée pour permettre le traitement de tels déchets DASRI, notamment en broyant ces déchets, puis en les stérilisant par vapeur d'eau.

En sortie de ce traitement, les déchets DASRI traités sont constitués de broyats stérilisés assimilables à des déchets ménagers qui peuvent rejoindre la filière classique des ordures ménagères.

Jusqu'à présent, dans la majorité des établissements de soins, l'activité liée à la prise en charge, au traitement et à l'élimination de ces déchets est centralisée sur un seul et même site ; ceci essentiellement pour des raisons de coût et d'organisation.

Il existe donc au sein de chaque établissement de soins une véritable logistique pour acheminer les déchets DASRI sur un tel site de traitement, dans des conditions de transport et de stockage normées, en vue de leur traitement puis de leur élimination.

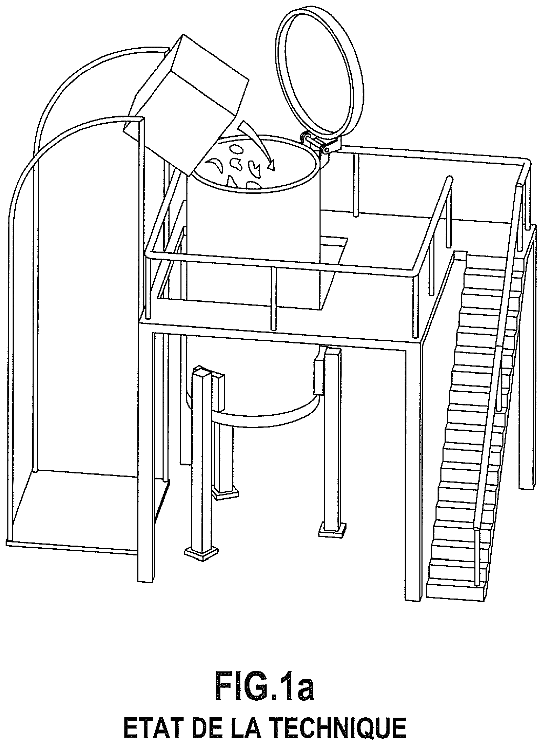

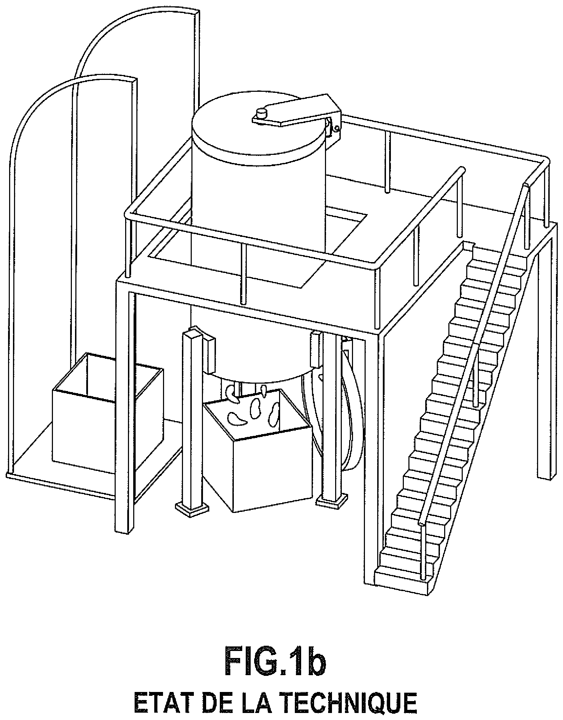

Arrivés sur les sites de traitement qui sont spécialement dédiés à l'élimination des déchets DASRI, les déchets sont traités grâce à des installations spécifiques telles que celles représentées sur les figures 1a et 1b qui sont annexées à la présente description.

Comme on peut le constater sur la figure 1a, on observe que les installations qui sont connues dans l'état de la technique et qui sont utilisés actuellement sont de grandes dimensions (parfois jusqu'à 7 mètres de haut) : De telles installations permettent donc un traitement centralisé pour traiter un gros volume de déchets DASRI.

Sur cette figure, on observe que ce genre d'installation comporte un système d'ascenseur et une cuve de traitement qui est adaptée pour permettre un traitement par stérilisation des déchets : ce genre de cuves de traitement est adapté pour reproduire des conditions de pression et de température élevées permettant la stérilisation.

Comme représenté sur cette figure, on réalise donc le traitement des déchets en plaçant les déchets DASRI dans une telle cuve de traitement ; de telles cuves de traitement sont décrites dans le document FR 2 865 011 qui appartient à la demanderesse.

Pour ce faire, le système d'ascenseur permet d'acheminer un premier container qui contient les déchets DASRI à traiter au niveau de la partie supérieure de l'installation. Il est ensuite nécessaire de charger la cuve de traitement au niveau de son ouverture supérieure.

Une fois les déchets DASRI chargés dans la cuve de traitement, il est nécessaire de fermer cette ouverture supérieure par un couvercle de fermeture en vue du traitement de ces déchets, ce traitement s'effectuant par broyage, puis chauffage en utilisant la vapeur d'eau, et par augmentation de la pression.

Ensuite, comme représenté en figure 1b, après traitement par stérilisation, on place un deuxième container sous la cuve de traitement, et on ouvre une trappe au niveau de la partie inférieure de cette cuve en sorte de déverser les déchets traités dans le deuxième container.

Comme représenté en figures la et 1b, il est donc nécessaire de disposer d'une structure spécifique pour pouvoir accéder à la partie supérieure de la cuve de traitement : non seulement l'installation nécessite un système d'ascenseur pour élever le premier container, mais l'installation nécessite également un escalier ou une échelle pour qu'un des opérateurs puisse intervenir au niveau de la cuve de traitement afin de veiller à ce que les opérations de chargement se déroulent correctement.

Par ailleurs, pour permettre la récupération des déchets traités, il est nécessaire de placer la cuve de traitement sur un support spécifique permettant de libérer un accès suffisant sous la cuve de traitement pour le passage d'un deuxième container en vue de la réception des déchets traités.

De plus, un tel support, qui généralement est à hauteur d'homme, doit être solide pour pouvoir supporter le poids de la cuve de traitement.

Par ailleurs, la trappe agencée sous la cuve de traitement doit être capable de résister, lorsque les déchets DASRI sont à l'intérieur de la cuve de traitement, à la force exercée par la masse des déchets.

On observe donc que les installations pour le traitement des déchets DASRI telles que celles connues dans l'état de la technique ne sont pas adaptés pour les « petits » producteurs de DASRI.

Par ailleurs, pour répondre aux différentes exigences imposées par les différentes normes en vigueur dans le domaine de la filière du traitement et de l'élimination des déchets DASRI, il semble très intéressant aujourd'hui de pouvoir trouver une solution efficace permettant de traiter ces déchets DASRI *in situ,* et ce notamment pour éviter les différentes problématiques liées au stockage et au transport.

Il s'avère en effet que les différentes manutentions relatives aux déchets DASRI non encore traités peuvent s'avérer dangereuses pour les personnes chargées de l'acheminement des déchets vers les sites de traitement.

De plus, il est maintenant demandé pour des raisons sanitaires évidentes de neutraliser au plus vite de ces déchets DASRI pour éviter toutes nuisances sanitaires et limiter les éventuelles maladies nosocomiales susceptibles d'être provoquées par un stockage prolongé dans le temps de tels déchets.

Pour ces mêmes raisons, il est important également que les opérateurs en charge de ces manipulations ne soient en contact à aucun moment avec ces déchets, même traités.

Il serait donc particulièrement avantageux d'apporter une solution pour résoudre ces différents problèmes, une telle solution devant notamment réduire le volume occupée par les installations actuelles, ceci afin de pouvoir mettre en place des installations de traitement de taille réduite, par exemple dans chaque service médical et/ou à chaque étage d'un bâtiment hospitalier : la miniaturisation de telles installations semble être une piste séduisante.

Toutefois, comme on peut le comprendre dans la suite de la description, miniaturiser de telles installations n'est pas sans engendrer de nouvelles problématiques.

Dans ce contexte particulier, la demanderesse observe donc un défaut manifeste en matière d'installations de taille réduite pour le traitement des déchets DASRI.

Bien que certains des documents de l'état de la technique tels que le document GB 2 297 553, qui montre un système de récupération selon le préambule de la revendication 1, WO 02/06479 et US 4 670 227 apportent des solutions intéressante, la demanderesse considère que les différents enseignements proposés n'offrent pas de solutions pleinement satisfaisantes permettant à la fois un remplissage, un traitement, et une récupération simple des déchets DASRI, sans aucun contact avec ces déchets, même lorsque ceux-ci sont traités et qu'il faut les récupérer.

### Objet et résumé de la présente invention

L'objet de la présente invention est d'apporter une solution aux problèmes précités parmi d'autres problèmes, les problèmes liés aux coûts et à la fabrication étant bien évidemment pris en considération dans l'objet de la présente invention.

Pour rappel, il est déterminant aujourd'hui de pouvoir trouver une solution efficace permettant de traiter les déchets DASRI *in situ,* ceci notamment pour éviter les différentes problématiques liées au stockage et au transport.

Il est donc particulièrement avantageux dans le cadre de la présente invention d'apporter une telle solution pour réduire le volume occupée actuellement par de telles installations.

Miniaturiser de telles installations n'est pas sans engendrer de nouvelles problématiques : la miniaturisation d'une installation dans laquelle la partie supérieure de la cuve de traitement serait accessible par un homme sans que celui-ci ait recours à un quelconque moyen d'élévation (ascenseur, échelle, escalier, etc.) entraînerait de nouvelles problématiques, notamment en ce qui concerne le système de récupération des déchets et de vidange de la cuve de traitement.

Le document GB 2 297 553 propose une solution permettant de résoudre au moins partiellement ce problème d'encombrement. Toutefois, dans ce document, l'extraction et la récupération des déchets n'impliquent pas une cinématique intuitive qui assure en outre aux différents opérateurs toutes les conditions nécessaires pour éviter à ces derniers d'être en contact directement avec ces déchets traités.

L'objectif de la présente invention est donc d'apporter une solution simple et efficace pour permettre l'extraction et la récupération des déchets ainsi que la vidange d'une cuve de traitement, ceci sans contact avec l'opérateur.

A cet effet, l'objet de la présente invention concerne un système de récupération pour cuve de traitement telle que par exemple la cuve décrite dans le document FR 2 865 011.

Le système de récupération selon la présente invention comporte un corps principal creux qui est destiné à être positionné de façon solidaire sous la cuve de traitement.

A cet effet, l'objet de la présente invention concerne un système de récupération pour cuve de traitement selon la revendication 1.

Le système de récupération selon la présente invention comporte un corps principal creux qui est destiné à être positionné de façon solidaire sous la cuve de traitement.

Le système de récupération selon la présente invention comporte également un panier qui est mobile et qui est apte à contenir au moins un objet provenant de la cuve de traitement, et notamment d'un broyeur intégré à la cuve de traitement.

On comprend dans la suite de la description qu'il s'agit d'un objet tel que d'un déchet DASRI traité provenant de la cuve de traitement.

Toutefois, il peut s'agit de tous autres types d'objets.

Selon l'invention, le corps principal présente sur une de ses parois latérales une ouverture configurée pour permettre le passage du panier.

Selon l'invention, le système de récupération comporte en outre un moyen d'extraction agencé avec le panier pour permettre un mouvement de translation du panier par rapport au corps principal en passant à travers l'ouverture du corps principal.

Grâce à un tel mouvement de translation, le moyen d'extraction permet le mouvement du panier entre une première position dite de stockage dans laquelle le panier est positionné à l'intérieur du corps principal, et une deuxième position dite d'extraction dans laquelle le panier est positionné au moins partiellement à l'extérieur du corps principal.

Ainsi, dans la première position, le panier peut recevoir et contenir le ou les objets qui proviennent du broyeur de la cuve de traitement ; et, dans la deuxième position, le contenu du panier devient accessible pour l'opérateur.

Cet agencement spécifique permet avantageusement de déplacer la fonction d'extraction d'une configuration classique dans laquelle l'extraction et la récupération des objets se fait sous la cuve de traitement, à une configuration nouvelle dans laquelle l'extraction et la récupération des objets se fait sur le côté.

Dans un mode de réalisation avantageux de la présente invention, le moyen d'extraction comporte un moyen de mise en translation du panier par rapport au corps principal.

Avantageusement, le moyen de mise en translation comporte deux arbres solidaires du panier, et le corps principal comporte deux pièces de guidage solidaires du corps principal et montés aptes à permettre le guidage respectif des deux arbres.

Les deux arbres sont ainsi montés aptes à translater dans les deux pièces de guidage, ce qui permet la mise en translation du panier.

Le moyen d'extraction et le corps principale sont ainsi agencés ensemble en sorte de former un système de glissière permettant le passage du panier de la première position vers la deuxième position, ou inversement.

Avantageusement, le moyen de mise en translation comporte un moyen de préhension configuré pour favoriser la translation horizontale du panier par rapport au corps principal.

Pour rappel, éviter tout contact avec les déchets lors de la vidange du panier est une des principales contraintes de la présente invention.

Selon l'invention, le moyen d'extraction est agencé avec le panier pour permettre, lorsque le panier est dans la deuxième position, un mouvement de rotation du panier sur lui-même.

Cet agencement du moyen d'extraction avec le panier permet au panier de pouvoir présenter une troisième position dite de vidange dans laquelle le panier présente une inclinaison permettant une vidange gravitaire de son contenu.

Dans cette troisième position, par une simple rotation, l'opérateur déverse le contenu du panier dans un container en vue de l'évacuer, ceci sans contact direct avec les déchets.

De préférence, le moyen de mise en rotation comprend un axe solidaire du panier et éventuellement un moyen d'actionnement formant également le moyen de préhension.

Cette configuration particulière dans laquelle le système se compose d'un panier et de deux arbres, de deux moyens de guidage, et d'un axe de rotation coopérant ensemble en sorte de permettre indépendamment une translation puis une rotation du panier, et ceci toujours selon un même plan, permet de répondre aux différentes contraintes imposées ci-dessus, à savoir principalement permettre l'extraction et la vidange des déchets traités, ceci sans aucun contact et en répondant à une contrainte de miniaturisation des installations.

Avantageusement, le moyen d'extraction comporte un capot de protection apte à couvrir l'ouverture du corps principal lorsque le panier est dans la première position.

Avantageusement, le système de récupération selon la présente invention comporte un moyen de verrouillage/déverrouillage agencé avec le capot de protection pour permettre une fermeture hermétique du moyen d'extraction avec le corps principal lorsque le panier est dans la première position.

Avantageusement, les différents éléments constitutifs du système selon la présente invention et notamment le corps principal et/ou le panier et/ou le moyen d'extraction sont constitués au moins partiellement dans un matériau inoxydable apte à résister à des températures sensiblement égales à de l'ordre d'au moins 150 degrés Celsius.

Corrélativement, l'objet de la présente invention concerne également une installation de traitement comportant a) une cuve de traitement apte à permettre le traitement d'au moins un objet tel que par exemple un déchet DASRI, et contenant éventuellement un broyeur, et b) un système de récupération tel que décrit ci-dessus.

Ainsi, l'objet de la présente invention par ses différents aspects fonctionnels et ses caractéristiques avantageuses pallie aux différents inconvénients relevés dans l'état de la technique en permettant une extraction, une récupération et/ou une vidange gravitaire d'au moins un objet tel qu'un déchet DASRI.

### Brève description des figures

D'autres caractéristiques et avantages de la présente invention ressortiront de la description ci-dessous, en référence aux figures 2 à 4 annexées qui en illustrent un exemple de réalisation dépourvu de tout caractère limitatif et sur lesquelles :
- la figure 2 représente schématiquement une vue en perspective d'une installation de traitement des déchets DASRI de l'état de la technique et une installation de traitement des déchets DASRI selon un mode de réalisation particulier de la présente invention ;
- les figures 3a à 3c représentent chacune une vue schématique en perspective d'un système de récupération selon un mode de réalisation particulier de la présente invention ; et
- la figure 4 représente schématiquement une installation de traitement des déchets DASRI conforme au mode de réalisation particulier de la figure 2.

### Description détaillée d'un exemple de réalisation de la présente invention

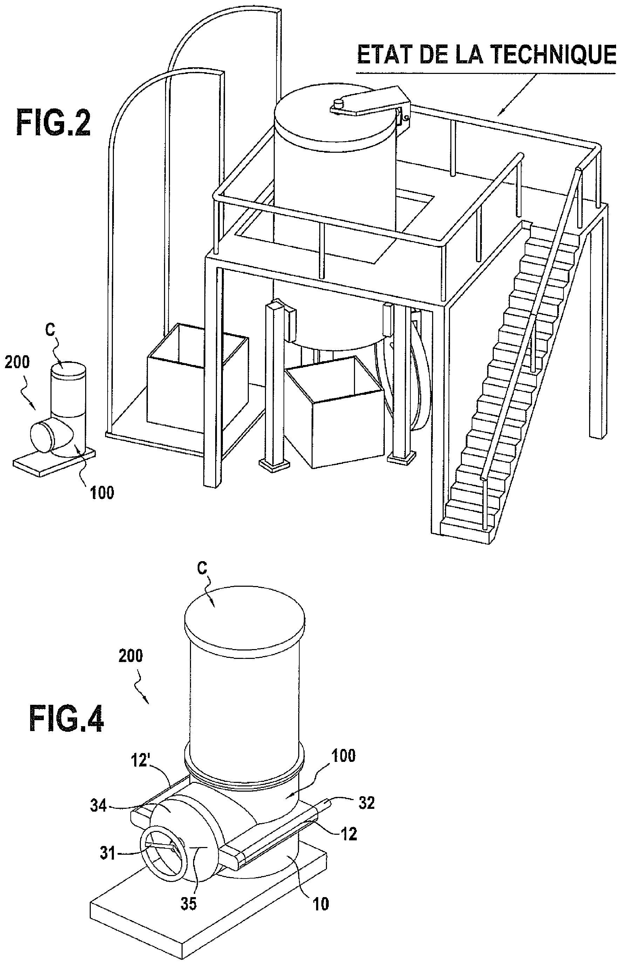

Un système de récupération et une installation de traitement conformes à un exemple de réalisation particulier de la présente invention vont maintenant être décrits dans ce qui suit en référence conjointement aux figures 2 à 4.

Dans l'exemple de réalisation décrit ici, on se place dans le domaine particulier des installations de traitement pour déchets DASRI.

Permettre une miniaturisation des installations de traitement est un des objectifs de la présente invention ; cet objectif à atteindre est représenté visuellement par la figure 2 sur laquelle on voit représentée sur la partie droite une installation de traitement classique qui présente les différents inconvénients précédemment décrits, et sur la gauche une installation de traitement 200 selon la présente invention, cette installation de traitement 200 comportant un système de récupération 100 qui est décrit plus en détails ci-dessous.

Cette figure 2 illustre clairement les différences structurelles en termes de dimensions entre les deux installations.

En effet, comme évoqué précédemment, la demanderesse cherche à proposer des installations de traitement aptes à être positionnées au sein de chaque étage ou au sein de chaque service dans un hôpital ou une clinique.

La filière du traitement et de l'élimination des déchets d'activités de soins à risques infectieux, dits DASRI, préconise en effet une décentralisation de telles installations avec des services de proximité au sein de chaque établissement de santé.

On comprend donc qu'il est nécessaire de miniaturiser et d'adapter les installations pour permettre de concevoir des installations d'un nouveau genre.

La demanderesse observe que les différents éléments qui sont adaptés pour le traitement des DASRI et qui sont constitutifs des deux types d'installations sont sensiblement identiques sur le plan fonctionnel : on retrouve dans chacune des installations une cuve de traitement avec des moyens de broyage et des moyens de stérilisation.

Toutefois, dans l'état de la technique, les moyens de déchargement (extraction et vidange des DASRI) consistent en un système de trappe situé sous la cuve de traitement, ce système de trappe s'ouvrant pour déverser les déchets traités dans un container (voir figure 1b précédemment décrite).

L'objectif de la présente invention est de trouver une solution pour le déchargement des DASRI après traitement dans la cuve pour répondre à une exigence de miniaturisation, cette solution devant permettre aux opérateurs de ne pas être en contact avec les DASRI tout au long de chacune des opérations de traitement de recyclage.

Bien évidemment, on comprendra que la solution envisagée dans le cadre de la présente invention peut également s'adapter aux installations de traitement de grande dimension telles que celles des figures 1a, 1b, et 2.

Une solution à apporter pour répondre à l'objectif recherché est d'éviter que le déchargement des DASRI se fasse sous la cuve de traitement comme c'est le cas dans l'état de la technique représenté notamment en figure 1b.

L'objet de la présente invention dans l'exemple décrit ici porte sur un nouveau système de récupération 100 pour cuve de traitement C.

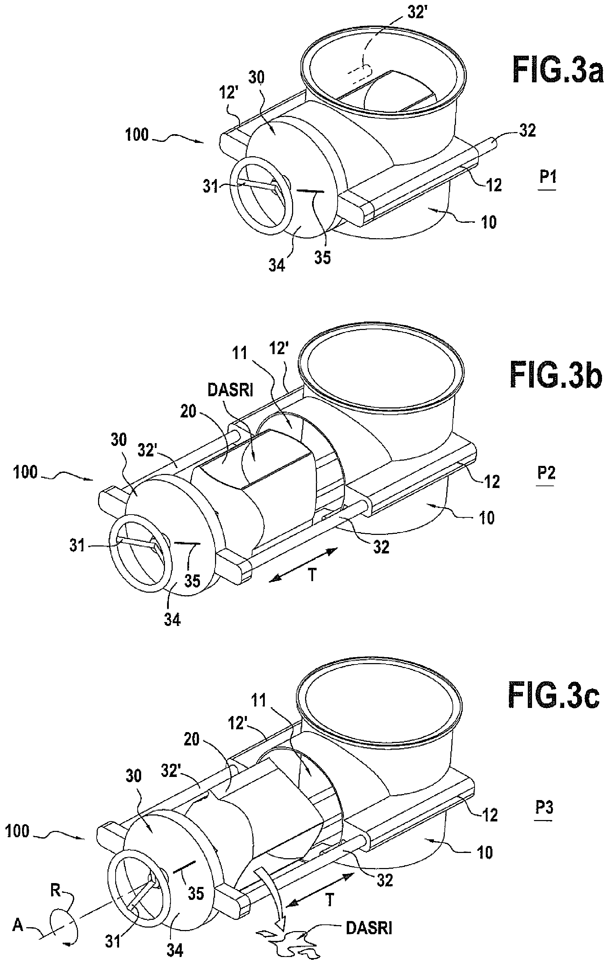

Comme illustré notamment en figures 3a à 3c, le système de récupération 100 selon la présente invention comporte un corps principal 10 creux destiné à être positionné de façon solidaire sous une cuve de traitement C.

Dans l'exemple décrit ici, le système de récupération 100 selon la présente invention comporte en outre un panier 20 mobile qui est apte à contenir une pluralité de déchets traités provenant de la cuve de traitement C.

Par panier, on entend dans toute la présente description tous types de contenant apte à recevoir et contenir un objet tel qu'un déchet d'activités de soins à risques infectieux ou DASRI, le contenant devant présenter une ouverture sur sa partie supérieure et un réceptacle pour pouvoir recevoir et contenir un tel objet.

Les installations de l'état de la technique présentent de nombreuses complexités et ne sont pas adaptées pour les « petits » producteurs de DASRI : permettre une solution alternative dans l'exécution des étapes d'extraction des déchets et de vidange de la cuve de traitement est caractéristique de la présente invention.

A cet effet, dans l'exemple décrit ici, et comme illustré en figure 3b, le corps principal 10 présente sur une de ses parois latérales une ouverture 11 configurée pour permettre le passage du panier 20.

Par ailleurs, toujours dans l'exemple décrit ici, et comme illustré en figure 3b, le système de vidange 100 comporte un moyen d'extraction 30 agencé avec le panier 20 pour permettre un mouvement de translation T du panier 20 par rapport au corps principal 10.

Dans l'exemple décrit ici, le moyen d'extraction 30 comporte un moyen de mise en translation (31, 32, 32') comportant deux arbres 32 et 32' montés solidaires au moyen d'extraction 30.

Le corps principal 10 comporte deux pièces de guidage 12 et 12' montés solidaires au corps principales 10, et aptes à permettre le guidage respectif des deux arbres 32 et 32'.

Cet agencement du corps principal 10 avec le moyen d'extraction 30 forme un système de glissière qui permet que le mouvement du panier 20 entre deux positions P1 ou P2.

Dans la figure 3a, le panier 20 est dans sa première position P1 dite de stockage.

Dans cette première position P1, le panier 20 est positionné à l'intérieur du corps principal 10 en sorte de pouvoir récupérer les déchets traités qui proviennent de la cuve de traitement C, et plus particulièrement du broyeur (non représenté ici).

Dans la figure 3b, le panier 20 est dans sa deuxième position P2 dite d'extraction.

Dans cette deuxième position P2, le panier 20 est extrait du corps principal 10 en passant à travers l'ouverture 11 grâce au mouvement de translation T autorisé par le système de glissière.

Cette position P2 permet l'extraction des déchets traités ; un opérateur pourra en effet retirer les déchets DASRI du panier 20, éventuellement par des moyens de préhension spécifiques.

Déplacer la fonction de récupération d'une configuration dans laquelle la récupération se fait sous l'installation de traitement par un moyen de trappe (comme illustré en figures 1a et 1b de l'état de la technique), à une configuration dans laquelle la récupération se fait sur le côté de l'installation est caractéristique de la présente invention.

Avantageusement, ce passage entre une première position P1 et une deuxième position P2 est facilité par un moyen de préhension 31 qui est configuré pour favoriser la translation horizontale T du panier 20 par rapport au corps principal 10 ; ce moyen de préhension 31 consiste en un système de poignée adapté pour faciliter le mouvement relatif T du moyen d'extraction 30 par rapport au corps principal 10.

Comme illustré notamment en figure 3c, le moyen d'extraction 30 est également agencé avec le panier 20 pour permettre, lorsque le panier 20 est extrait du corps principal 10 (en position P2), un mouvement de rotation R du panier 20 sur lui-même selon un axe A sensiblement horizontal. La cinématique du panier 20 lors de cette rotation R s'exécute ici dans le même plan horizontal, ce qui est différent de la solution proposée dans le document WO 92/20379 dans laquelle une rotation est prévue après obligatoirement une translation verticale.

Cet agencement spécifique permet de positionner le panier 20 selon une troisième position P3 dite de vidange dans laquelle le panier 20 présente une certaine inclinaison permettant une vidange gravitaire des déchets traités.

Ce passage de la deuxième position P2 vers la troisième position P3 est facilité par un moyen de mise en rotation 31 (formé par le moyen de préhension 31) qui consiste en un volant apte à présenter deux configurations dont la première configuration correspond à la deuxième position P2 du panier 20 et la deuxième configuration correspond à la troisième position P3 du panier 20.

Dans l'exemple décrit ici, le moyen d'extraction 30 comporte : a) un capot de protection 34 apte à couvrir l'ouverture 11 du corps principal 10 lorsque le panier 20 est dans la première position P1, b) un moyen de verrouillage/déverrouillage 35 agencé avec le capot de protection 34 pour permettre une fermeture hermétique du moyen d'extraction 30 avec le corps principal 10 lorsque le panier est dans la première position P1. On comprend ainsi que l'installation de traitement 200 comportant un système de récupération 100 selon la présente invention permet des gains significatifs en termes de taille, de coût et en termes d'utilisation.

L'installation de traitement 200 peut en effet être utilisée par un seul et même opérateur qui va pouvoir aisément charger la cuve de traitement C sans utiliser un système d'ascenseur ni un escalier comme c'est le cas aujourd'hui dans l'état de la technique illustré en figures 1a et 1b.

Ensuite, après traitement, ce même opérateur va pouvoir récupérer les déchets traités pour les réintroduire dans la filière classique des déchets ménagers, ceci sans être en contact avec ces déchets, et par des opérations de manutentions simples et intuitives.

La solution apportée par la présente invention permet d'être au plus prés des services concernés par le traitement et l'élimination des DASRI en évitant notamment le surcoût, la pollution, et les risques infectieux liés au transport et à la manutention des déchets sur des sites dédiés.

Il doit être observé que cette description détaillée porte sur un exemple de réalisation particulier de la présente invention, mais qu'en aucun cas cette description ne revêt un quelconque caractère limitatif à l'objet de l'invention qui est délimité par les revendications annexées; bien au contraire, elle a pour objectif d'ôter toute éventuelle imprécision ou toute mauvaise interprétation des revendications qui suivent.

## Revendications

1. Système de récupération (100) pour cuve de traitement comportant un corps principal (10) creux destiné à être positionné de façon solidaire sous une cuve de traitement (C), un panier (20) mobile apte à contenir au moins un objet, tel que par exemple un déchet d'activités de soins à risques infectieux, provenant de la cuve de traitement (C), le corps principal (10) présentant sur une de ses parois latérales une ouverture (11) configurée pour permettre le passage du panier (20), et un moyen d'extraction (30) agencé avec le panier (20) pour permettre un mouvement de translation (T) dudit panier (20) par rapport au corps principal (10) à travers ladite ouverture (11) entre au moins une première position (P1) dite de stockage dans laquelle le panier (20) est positionné à l'intérieur du corps principal (10), et une deuxième position (P2) dite d'extraction dans laquelle le panier (20) est positionné au moins partiellement à l'extérieur du corps principal (10), **caractérisé en ce que** le moyen d'extraction (30) est agencé avec le panier (20) pour permettre, lorsque le panier (20) est dans la deuxième position (P2), un mouvement de rotation (R) du panier (20) sur lui-même en sorte de présenter une troisième position (P3) dite de vidange dans laquelle le panier (20) présente une inclinaison permettant une vidange gravitaire au moins partielle de son contenu.

2. Système de récupération (100) selon la revendication 1, caractérisé en que le moyen d'extraction (30) comporte un moyen de mise en translation (31, 32, 32') du panier (20) par rapport au corps principal (10).

3. Système de récupération (100) selon la revendication 2, le corps principal (10) comportant deux pièces de guidage (12, 12') montées solidaires au corps principal (10), **caractérisé en ce que** le moyen de mise en translation (31, 32, 32') comporte deux arbres (32, 32') solidaires du panier (20) et montés aptes à être guidés dans les deux pièces de guidage (12, 12').

4. Système de récupération (100) selon la revendication 2 ou 3, caractérisé en que le moyen de mise en translation (31, 32, 32') comporte un moyen de préhension (31) apte à favoriser le mouvement de translation (T).

5. Système de récupération (100) selon l'une quelconque des revendications 1 à 4, **caractérisé en ce que** le moyen d'extraction (30) comporte un moyen de mise en rotation (31) agencé avec le panier (20) pour permettre le passage de la deuxième position (P2) vers la troisième position (P3) ou inversement.

6. Système de récupération (100) selon la revendication 5, **caractérisé en ce que** le moyen de mise en rotation (31) comprend un axe solidaire du panier (20) et un moyen d'actionnement (31) favorisant la rotation (R) autour dudit axe.

7. Système de récupération (100) selon la revendication 5 ou 6 rattachée à la revendication 4, **caractérisé en ce que** le moyen de mise en rotation (31) forme également le moyen de préhension (31).

8. Système de récupération (100) selon l'une quelconque des revendications précédentes, caractérisé en que le moyen d'extraction (30) comporte un capot de protection (34) apte à couvrir l'ouverture (11) du corps principal (10) lorsque le panier (20) est dans la première position (P1) du panier.

9. Système de récupération (100) selon la revendication 8, **caractérisé en ce qu'**il comporte un moyen de verrouillage/déverrouillage (35) agencé avec le capot de protection (34) pour permettre une fermeture hermétique du moyen d'extraction (30) avec le corps principal (10) lorsque le panier (20) est dans la première position (P1).

10. Système de récupération (100) selon l'une quelconque des revendications précédentes, **caractérisé en ce que** le corps principal (10) et/ou le panier (20) et/ou le moyen d'extraction (30) sont constitués au moins partiellement dans un matériau inoxydable apte à résister à des températures au moins égales à 150 degrés Celsius.

11. Installation de traitement (200) comportant une cuve de traitement (C) apte à permettre le traitement d'au moins un objet tel que par exemple un déchet d'activités de soins à risques infectieux, **caractérisée en ce qu'**elle comporte un système de récupération (100) selon l'une quelconque des revendications précédentes, ledit système de récupération (100) étant positionné sous la cuve de traitement (C).

12. Installation de traitement (200) selon la revendication 11, **caractérisée en ce que** la cuve de traitement (C) comporte en son intérieur un broyeur.

## Patentansprüche

1. Rückgewinnungssystem (100) für einen Aufbereitungstank, umfassend einen hohlen Hauptkörper (10), der dazu bestimmt ist, fest verbunden unter einem Aufbereitungstank (C) platziert zu werden, einen bewegbaren Behälter (20), der geeignet ist, mindestens ein Objekt zu enthalten, wie beispielsweise Abfall von Aktivitäten zur Versorgung infektiöser Risiken, der aus dem Aufbereitungstank (C) stammt, wobei der Hauptkörper (10) an einer seiner Seitenwände eine Öffnung (11) aufweist, die ausgelegt ist, das Hindurchgehen des Behälters (20) zu gestatten, und ein Extraktionsmittel (30), das mit dem Behälter (20) eingerichtet ist, eine Translationsbewegung (T) des Behälters (20) in Bezug auf den Hauptkörper (10) quer durch die Öffnung (11) zu gestatten zwischen mindestens einer ersten Position (P1), die als Lagerposition bezeichnet wird, in welcher der Behälter (20) innerhalb des Hauptkörpers (10) positioniert ist, und einer zweiten Position (P2), die als Extraktionsposition bezeichnet wird, in welcher der Behälter (20) mindestens teilweise außerhalb des Hauptkörpers (10) positioniert ist,
**dadurch gekennzeichnet, dass** das Extraktionsmittel (30) mit dem Behälter (20) eingerichtet ist, wenn sich der Behälter (20) in der zweiten Position (P2) befindet, eine Drehbewegung (R) des Behälters (20) um sich selbst zu gestatten, um eine dritte Position (P3), die als Entleerungsposition bezeichnet wird, einzunehmen, in welcher der Behälter (20) eine Neigung aufweist, die ein mindestens teilweises Entleeren seines Inhalts durch Schwerkraft gestattet.

2. Rückgewinnungssystem (100) gemäß Anspruch 1, **dadurch gekennzeichnet, dass** das Extraktionsmittel (30) ein Mittel (31, 32, 32') zur translatorischen Verschiebung des Behälters (20) in Bezug auf den Hauptkörper (10) umfasst.

3. Rückgewinnungssystem (100) gemäß Anspruch 2, wobei der Hauptkörper (10) zwei Führungsstücke (12, 12') umfasst, die am Hauptkörper (10) fest montiert sind, **dadurch gekennzeichnet, dass** das Mittel (31, 32, 32') zur translatorischen Verschiebung zwei Schafte (32, 32') umfasst, die mit dem Behälter (20) fest verbunden sind und geeignet montiert ist, um in die beiden Führungsstücke (12, 12') geführt zu werden.

4. Rückgewinnungssystem (100) gemäß Anspruch 2 oder 3, **dadurch gekennzeichnet, dass** das Mittel (31, 32, 32') zur translatorischen Verschiebung ein Greifmittel (31) umfasst, das geeignet ist, die Translationsbewegung (T) zu fördern.

5. Rückgewinnungssystem (100) gemäß einem der Ansprüche 1 bis 4, **dadurch gekennzeichnet, dass** das Extraktionsmittel (30) ein Drehmittel (31) umfasst, das mit dem Behälter (20) eingerichtet ist, den Übergang von der zweiten Position (P2) in die dritte Position (P3) oder umgekehrt zu gestatten.

6. Rückgewinnungssystem (100) gemäß Anspruch 5, **dadurch gekennzeichnet, dass** das Drehmittel (31) eine feste Achse des Behälters (20) und ein Betätigungsmittel (31), das die Drehung (R) um die Achse fördert, umfasst.

7. Rückgewinnungssystem (100) gemäß Anspruch 5 oder 6, rückbezogen auf Anspruch 4, **dadurch gekennzeichnet, dass** das Drehmittel (31) auch das Greifmittel (31) bildet.

8. Rückgewinnungssystem (100) gemäß einem der vorhergehenden Ansprüche, **dadurch gekennzeichnet, dass** das Extraktionsmittel (30) eine Schutzhaube (34) umfasst, die geeignet ist, die Öffnung (11) des Hauptkörpers (10) abzudecken, wenn sich der Behälter (20) in der ersten Position (P1) des Behälters befindet.

9. Rückgewinnungssystem (100) gemäß Anspruch 8, **dadurch gekennzeichnet, dass** dieses ein Verriegelungs-/Entriegelungsmittel (35) umfasst, das mit der Schutzhaube (34) eingerichtet ist, um ein hermetisches Verschließen des Extraktionsmittels (30) mit dem Hauptkörper (10) zu gestatten, wenn sich der Behälter (20) in der ersten Position (P1) befindet.

10. Rückgewinnungssystem (100) gemäß einem der vorhergehenden Ansprüche, **dadurch gekennzeichnet, dass** der Hauptkörper (10) und/oder der Behälter (20) und/oder das Extraktionsmittel (30) mindestens teilweise aus einem rostfreien Material bestehen, das geeignet ist, Temperaturen von mindestens 150 Grad Celsius standzuhalten.

11. Aufbereitungsanlage (200), umfassend einen Aufbereitungstank (C), der geeignet ist, die Aufbereitung mindestens eines Objekts, wie beispielsweise von Abfall von Aktivitäten zur Versorgung infektiöser Risiken, zu gestatten, **dadurch gekennzeichnet, dass** diese ein Rückgewinnungssystem (100) gemäß einem der vorhergehenden Ansprüche umfasst, wobei das Rückgewinnungssystem (100) unter dem Aufbereitungstank (C) positioniert ist.

12. Aufbereitungsanlage (200) gemäß Anspruch 11, **dadurch gekennzeichnet, dass** der Aufbereitungstank (C) in seinem Inneren einen Zerkleinerer umfasst.

## Claims

1. A recovery system (100) for a treatment tank comprising a hollow main body (10) designed to be positioned fixedly below a treatment tank (C), a movable basket (20) capable of containing at least one item, such as for example infectious clinical waste, originating from the treatment tank (C), the main body (10) having on one of its lateral walls an opening (11) configured to allow the passage of the basket (20), and an extraction means (30) arranged with the basket (20) to allow a translation (T) movement of said basket (20) with respect to the main body (10) through said opening (11) between at least one first position (P1) called the storage position, in which the basket (20) is positioned in the interior of the main body (10) and a second position (P2) called the extraction position, in which the basket (20) is positioned at least partially at the exterior of the main body (10),
**characterized in that** the extraction means (30) is arranged with the basket (20) to allow, when the basket (20) is in the second position (P2), a rotation movement (R) of the basket (20) about itself so as to assume a third position (P3), called the drainage position, in which the basket (20) has an inclination allowing at least partial gravity drainage of its content.

2. The recovery system (100) according to claim 1, **characterized in that** the extraction means (30) includes means for translating (31, 32, 32') the basket (20) with respect to the main body (10).

3. The recovery system (100) according to claim 2, the main body (10) comprising two guide parts (12, 12') mounted fixedly with the main body (10), **characterized in that** the translating means (31, 32, 32') includes two shafts (32, 32') fixed to the basket (20) and mounted capable of being guided in the two guide parts (12, 12').

4. The recovery system (100) according to claim 2 or 3, **characterized in that** the translating means (31, 32, 32') includes a gripping means (31) capable of favoring the translation movement (T).

5. The recovery system (100) according to any one of claims 1 to 4, **characterized in that** the extraction means (30) includes a rotating means (31) arranged with the basket (20) to allow passage from the second position (P2) to the third position (P3) or the reverse.

6. The recovery system (100) according to claim 5, **characterized in that** the rotating means (31) comprises an axle fixed to the basket (20) and a means of actuation (31) favoring rotation (R) around said axle.

7. The recovery system (100) according to claim 5 or 6, linked to claim 4, **characterized in that** the rotating means (31) also forms the gripping means (31).

8. The recovery system (100) according to any one of the preceding claims, **characterized in that** the extraction means (30) includes a protective cap (34) capable of covering the opening (11) of the main body (10) when the basket (20) is in the first position (P1) of the basket.

9. The recovery system (100) according to claim 8, **characterized in that** it includes a locking/unlocking means (35) arranged with the protective cap (34) to allow hermetic closure of the extraction means (30) with the main body (10) when the basket (20) is in the first position (P1).

10. The recovery system (100) according to any one of the preceding claims, **characterized in that** the main body (10) and/or the basket (20) and/or the extraction means (30) consist at least partially of a rustproof material capable of resisting temperatures at least equal to 150 degrees Celsius.

11. A treatment installation (200) including a treatment tank (C) capable of allowing the treatment of at least one object such as for example infections clinical waste, **characterized in that** it comprises a recovery system (100) according to any one of the preceding claims, said recovery system (100) being positioned under the treatment tank (C).

12. The treatment installation (200) according to claim 11, **characterized in that** the treatment tank (C) includes a grinder in its interior.
